# EUROPÄISCHE PATENTSCHRIFT

(11) **EP 1 807 453 B1**
(45) Veröffentlichungstag und Bekanntmachung des Hinweises auf die Patenterteilung: **26.11.2008**
(21) Anmeldenummer: 05798300.9
(22) Anmeldetag: 31.10.2005
(51) Int. Cl.: C08F 2/44, C08F 265/06

(54) **KUNSTSTOFF-FORMKÖRPER UND VERFAHREN ZU DESSEN HERSTELLUNG**
MOLDED PLASTIC BODY AND METHOD FOR PRODUCING THE SAME
CORPS EN PLASTIQUE MOULÉ ET PROCÉDÉ DE PRODUCTION ASSOCIÉ

(30) Priorität: 04.11.2004 DE 102004055365
(43) Veröffentlichungstag der Anmeldung: 18.07.2007
(73) Patentinhaber: Schock GmbH, 94209 Regen (DE)
(72) Erfinder: REICHENBERGER, Roland, 94209 Regen (DE); PATERNOSTER, Rudolf, 94269 Rinchnach (DE); HOCK, Klaus, 94209 Regen (DE)
(74) Vertreter: Crazzolara, Helmut
(86) Internationale Anmeldenummer: PCT/EP2005/011627
(87) Internationale Veröffentlichungsnummer: WO 2006/048214

(56) Entgegenhaltungen:
- EP-A- 0 581 225
- EP-A- 0 659 786
- EP-A- 1 207 180
- DE-A1- 19 507 875
- DE-A1- 19 949 461

## Beschreibung

Die Erfindung betrifft einen Kunststoff-Formkörper gemäß dem Oberbegriff des Anspruchs 1 sowie ein Verfahren zur Herstellung eines Kunststoff Formkörpers gemäß dem Oberbegriff des nebengeordneten Anspruchs.

Gattungsgemäße Formkörper werden beispielsweise im Küchen- oder Badezimmerbereich eingesetzt, insbesondere als Spülbecken, Arbeitsplatten, Duschtassen oder dergleichen. Bei diesen Anwendungen ist es besonders wichtig, dass die Formkörper leicht gründlich zu reinigen sind, eine hohe Widerstandsfähigkeit gegenüber mechanischen und thermischen Belastungen und insbesondere gegenüber thermischen Wechselbelastungen in Verbindung mit Wasser oder Wasserdampf aufweisen.

Aus der DE 38 32 351 A1 sind Kunststoff-Formkörper gemäß dem Oberbegriff des Patentanspruchs 1 bekannt. Abgestimmt auf die Masse des Monomers in der Bindemittellösung wird im Stand der Technik ein so genannter Vernetzer zugegeben, der die räumliche Vernetzung von Polymerketten untereinander bewirkt und dadurch die Härte und Lösemittelbeständigkeit des hergestellten Formkörpers erhöht.
Eine Obergrenze des Anteils des Vernetzers bilden etwa 4 Gew.% bezogen auf den Monomeranteil.

Ein höherer Anteil des Vernetzers führt in Abhängigkeit von der Partikelgröße des anorganischen partikelförmigen Füllstoffes zu unterschiedlichen Ergebnissen, die aber unerwünscht sind. Erhöht man beispielsweise den Vernetzeranteil bei Verwendung eines Füllstoffes mit sehr kleiner Partikelgröße, führt dies dazu, dass die Formkörper während der formgebenden Polymerisation zerreißen. Bei gröberen Füllstoffen führt dagegen eine Erhöhung des Vernetzeranteils zu deutlich sichtbaren, insbesondere weißen Bereichen an der Oberfläche oder unmittelbar unter der Oberfläche, deren Verteilung darüber hinaus noch unregelmäßig ist, und der zugehörige Formkörper entspricht nicht den auch an die Optik gestellten hohen Qualitätsanforderungen.

Aus der DE 199 49 461 A1 ist eine aushärtbare Gießmasse bekannt, die einen Anteil von 2,5 Gew.% des Vernetzers (bezogen auf den Monomergehalt der Bindemittellösung) in der aus Monomer (MMA) und Polymer (PMMA) gebildeten Bindemittellösung enthält. In einigen der beschriebenen Ausführungsbeispiele wird ein weiterer Vernetzer, der von dem Vernetzer in der Bindemittellösung unterschiedlich ist, nicht in die Bindemittellösung eingebracht, sondern in eine Farbpigmentdispersion. Dementsprechend hergestellte Formteile weisen nicht die durch die vorliegende Erfindung erzielbaren Eigenschaften auf, insbesondere hinsichtlich der erzielbaren Glattheit der Oberfläche und der dadurch erzielbaren hervorragenden Reinigungsfähigkeit.

Aus der EP 0 581 225 A1 ist eine Gießharz-Suspension bekannt bestehend aus 40 bis 80 Gew.% eines anorganischen Füllstoffs, 60 bis 20 Gew.% einer flüssigen, polymerisierbaren organischen Vorstufe und 0 bis 5 Gewichtsteile bezogen auf die Summe des anorganischen Füllstoffs und der flüssigen, polymerisierbaren organischen Vorstufe einer polymerisierbaren Organosiliciumverbindung als Haftvermittler. Die Komponente der flüssigen, polymerisierbaren organischen Vorstufe besteht zu mindestens 50 Gewichtsteilen aus einem Monomer. Außerdem enthält die flüssige, polymerisierbare organische Vorstufe 0,01 bis 10 Gewichtsteile einer vernetzenden Monomerverbindung. Der Anteil der vernetzenden Monomerverbindung bezogen auf das Monomer beträgt daher zwischen 0,02 und 20 %. Bezogen auf die flüssige Polymervorstufe liegt der Gehalt an vernetzenden Monomeren vorzugsweise bei 0,1 bis 5 Gew.%.

Aus der DE 195 07 875 A1 ist ein Verfahren zur Herstellung hochgefüllter Kunststoffe bekannt, wobei der Gehalt an vernetzenden Monomeren in der Füllstoff Suspension im Allgemeinen bei 0,01 bis 10 Gew.%, vorzugsweise bei 0,1 bis 5 Gew.% bezogen auf den Monomergehalt beträgt.

Aus der DE 195 21 638 A1 ist ein Verfahren zur Herstellung hochgefüllter Kunststoffe mit Glitzereffekt bekannt, mit einer Füllstoffsuspension, deren Gehalt an vernetzenden Monomeren mit vorzugsweise 0,1 bis 5 Gew.% bezogen an den Monomergehalt angegeben ist.

Aus JP 09 067497 A und JP 63 068655 A sind ebenfalls Vernetzer enthaltende Reaktionsmassen bekannt, die aber auch im nicht-ausgehärteten Zustand nicht gießfähig sind.

Der Erfindung liegt die Aufgabe zugrunde, einen gattungsgemäßen Kunststoff-Formkörper sowie ein zugehöriges Herstellverfahren bereitzustellen, welche die Nachteile des Standes der Technik überwinden. Insbesondere soll der Formkörper gute Gebrauchseigenschaften, insbesondere gute Pflegeeigenschaften und eine hohe Widerstandsfähigkeit gegen mechanische und thermische Belastungen, sowie eine hohe optische Qualität aufweisen. Das zugehörige Herstellverfahren soll einfach und kostengünstig Formkörper mit hoher mechanischer und optischer Qualität hervorbringen.

Diese Aufgabe ist durch den im Anspruch 1 bestimmten Formkörper sowie durch das im nebengeordneten Anspruch bestimmte Herstellverfahren gelöst. Besondere Ausführungsarten der Erfindung sind in den Unteransprüchen bestimmt.

Die Aufgabe ist bei einem Kunststoff-Formkörper, der aus einer ausgehärteten Reaktionsmasse hergestellt ist, wobei die gießfähige Reaktionsmasse im nicht-ausgehärteten Zustand einen anorganischen partikelförmigen Füllstoff mit einem Anteil von 50 bis 90 Gew.% bezogen auf die Reaktionsmasse, einen Vernetzer, und eine Bindemittellösung mit einem Anteil von 10 bis 50 Gew.% bezogen auf die Reaktionsmasse aufweist, wobei die Bindemittellösung ein Monomer und ein darin gelöstes Polymer aufweist, dadurch gelöst, dass der Anteil des Vernetzers mehr als 20 Gew.% beträgt bezogen auf den Anteil des Monomers in der Bindemittellösung, und dass die Füllstoffpartikel nach der Polymerisation an mindestens einer Oberfläche des Formkörpers mit einer geschlossenen Schicht polymerisierter Bindemittellösung beschichtet sind. Das Herstellen des Formkörpers erfolgt vorzugsweise in einer Gießform.

Es ist überaus erstaunlich, dass ausgehend von einem Anteil des Vernetzers von etwa 3 Gew.% bezogen auf den Monomeranteil bei einer Erhöhung sich insbesondere die optischen Eigenschaften der hergestellten Formkörper zunächst verschlechtern, um sich dann bei einer weiteren Erhöhung des Anteils wieder deutlich zu verbessern. Bei einer Erhöhung über 20 Gew.% hinaus, erhält man überraschenderweise Formteile, die sowohl hinsichtlich der Abriebfestigkeit, Kratzunempfindlichkeit und Reinigungsfreundlichkeit ein Optimum dieser Eigenschaften vereinen. Erfindungsgemäß wird eine homogene Verteilung von kleinen Polymerbereichen erreicht, die nicht mehr die negativen Eigenschaften der Fleckenbildung zeigen und dennoch den hergestellten Formkörper ausreichend stabilisieren, um ein Reißen während und nach der Formgebung zu verhindern. Außerdem ergibt sich eine geschlossene Oberfläche, die darüber hinaus auch haptisch deutliche Vorteile gegenüber den Formkörpern aus dem Stand der Technik aufweist und eine widerstandsfähige Oberfläche mit einer hohen optischen Attraktivität verbindet. Die Oberfläche weist eine verbesserte Beständigkeit gegen herabfallende Gegenstände und/oder eine höhere Kratzfestigkeit auf, und ist auch gegen heiße Oberflächen widerstandsfähiger.

Die erzielbaren Gebrauchseigenschaften hängen auch von der Korngröße des eingesetzten Füllstoffes ab. Füllstoffe mit einer Korngröße unter 0,05 mm können für viele Anwendungsfälle als feine Füllstoffe bezeichnet werden. Bei Verwendung solcher feiner Füllstoffe ergibt sich in der Regel eine glatte Oberfläche, die besonders gut zu reinigen ist; allerdings ist die Sichtbarkeit von Kratzern erhöht, beim Heißtopftest können Mattierungen auftreten und die Abriebfestigkeit ist im Vergleich zu Formkörpern mit gröberen Füllstoffen geringer. Bei Verwendung von gröberen Füllstoffen ergibt sich dagegen in der Regel eine höhere Widerstandsfähigkeit gegen mechanische und thermische Beanspruchungen, jedoch können Aufhellungen beim i-leiß-KaEt-Zyklen-Test und beim Wasserdampf-Test auftreten, d.h. beim Einwirken von heißem Wasser. Zudem kann es zu Aufrauungen im Bereich des Spülenbodens kommen. Die Reinigungsfreundlichkeit derart hergestellter Formkörper ist allgemein geringer. Auch eine Kombination aus feinen und groben Füllstoffen führt nicht unmittelbar zu einem optimalen Ergebnis.

Sowohl bei feinen als auch bei groben Füllstoffen lässt sich aber eine weitere Verbesserung der Gebrauchseigenschaften erzielen, wenn der Anteil des Vernetzers nämlich mehr als 20 und insbesondere zwischen 20 und 30 Gew.% beträgt, jeweils bezogen auf den Anteil des Monomers in der Bindemittellösung. Vorzugsweise wird dabei ein Vernetzer verwendet, der schneller als die sonstige polymerisierbare Bindemittellösung polymerisiert. Dadurch wird eine besonders harte Oberfläche mit entsprechend guten Gebrauchseigenschaften erzeugt.
Als Vernetzer wird dabei vorzugsweise ein zweifach oder mehrfach funktionelles Monomer oder Polymer verwendet, insbesondere ein zweifach oder mehrfach funktionelles Acrylat oder Methacrylat, wie beispielsweise Ethylenglykoldimethacrylat oder Trimethylolpropantrimethacrylat. Ein weiterer möglicher Vernetzer ist Pentaerythritoltriacrylat oder Pentaerythritoltetraacrylat oder Glycerindimethacrylat. Untersuchungen haben ergeben, dass der Vernetzer Bishphenol-A-ethoxylat(2)dimethacrylat trotz erfindungsgemäß hohen Anteils an der Bindemittellösung nicht die gewünschten Ergebnisse liefert, weshalb in einer bevorzugten Ausführungsform der Erfindung dieser Vernetzer nicht geeignet ist, sondern andere Vernetzer vorzuziehen sind, insbesondere Trimethylolpropantrimethacrylat oder einer der oben genannten Vernetzer. Es kann auch vorteilhaft sein, eine Kombination aus zwei oder mehreren derartigen Vernetzern einzusetzen. Die summarische Bezeichnung Acrylat kann dabei sowohl Acrylate als auch Methacrylate umfassen.

Der Anteil der Bindemittellösung beträgt zwischen 10 und 45 Gew.%, insbesondere zwischen 15 und 40 Gew.% und vorzugsweise zwischen 20 und 35 Gew.%, jeweils bezogen auf die Reaktionsmasse. Bei diesen Prozentangaben ist der Vernetzer mit seinem erfindungsgemäß hohen Anteil nicht der Bindemittellösung zugerechnet. Als Monomere können insbesondere Styrol, Acrylsäure oder Methacrylsäure bzw. deren Ester verwendet werden. In einer besonderen Ausführungsart weist die Bindemittel lösung eine Mischung aus Methylmethacrylat und Polymethylmethacrylat auf, oder eine Mischung aus Methylmethacrylat und einem Polymeren, insbesondere eine Mischung aus Methylmethacrylat und einem Homo- oder Copolymeren des Methylmethacrylat, wobei das Copolymer vorzugsweise das Comonomer Etylmethacrylat oder Butylmethacrylat enthält.

Das Verhältnis der Gewichtsanteile von Polymer zu Monomer in der Bindemittel lösung beträgt dabei zwischen 1 : 1 und 1 : 10, insbesondere zwischen 1 ; 2 und 1 : 7 und vorzugsweise zwischen 1 : 3 und 1 : 5. Grundsätzlich sind dabei insbesondere die Partikelgröße der verwendeten Füllstoffpartikel und der erforderliche Anteil der Bindemittellösung in Wechselwirkung miteinander, dahingehend, dass tendenziell bei einer Erhöhung des Anteils gröbere Füllstoffpartikel der Anteil an Bindemittellösung reduziert werden kann.

Der Anteil des partikelförmigen anorganischen Füllstoffs beträgt vorzugsweise zwischen 55 und 85 Gew.%, insbesondere zwischen 60 und 80 Gew.% und vorzugsweise zwischen 65 und 75 Gew.%, jeweils bezogen auf die Reaktionsmasse. Dabei handelt es sich vorzugsweise um einen mineralischen anorganischen Füllstoff, insbesondere einen kristallinen Füllstoff wie beispielsweise Quarzsand.

Vorzugsweise weisen die Füllstoffpartikel eine Mohshärte von mehr als 5 auf, insbesondere mehr als 6 und vorzugsweise etwa 7. Dies gilt jedenfalls für den überwiegenden Anteil der verwendeten Füllstoffpartikel.
Aus technischen wie ökonomischen Gründen ist die Verwendung von Siliciumdioxid mit einer Mohshärte von etwa 7 bevorzugt. Alternativ oder ergänzend können auch andere und insbesondere noch härtere Füllstoffpartikel eingesetzt werden, die natürlich oder synthetisch gewonnen werden. Nur beispielhaft sei hier entsprechendes Glas, Siliciumcarbid, Aluminiumoxid oder Kohlenstoff in der Diamantmodifikation genannt.

Im Hinblick auf die oberflächennahe harte Schicht aufgrund des hohen Anteils an Vernetzer kommen auch vergleichsweise weiche Füllstoffe mit einer Mohshärte von weniger als 5 in Betracht, insbesondere solche mit einer Mohshärte von 3 bis 4, wie beispielsweise Calciumcarbonat oder dergleichen.

In einer Ausführungsart ist der Kunststoff-Formkörper dadurch gekennzeichnet, dass mehr als 90 Gew.% des partikelförmigen anorganischen Füllstoffs, insbesondere mehr als 95 Gew.%, jeweils bezogen auf den gesamten Füllstoff, eine Korngröße zwischen 0,05 und 2 mm aufweisen, insbesondere zwischen 0,05 und 1,0 mm, und vorzugsweise zwischen 0,05 und 0,3 mm.

Vorzugsweise werden natürlich gewonnene Quarzsande eingesetzt. Vorteilhaft sind insbesondere solche Quarzsande, die von großer chemischer Reinheit sind, insbesondere einen niedrigen Gehalt an Eisenoxid aufweisen, und darüber hinaus mit einem sehr engen Partikelgrößeband vorkommen, beispielsweise zwischen 0,05 und 0,3 mm, mit einem überwiegenden Masseanteil zwischen 0,1 mm und 0,2 mm. Solche Quarzsande werden beispielsweise von der Firma DORFNER unter dem Handelsnamen GEBA angeboten, siehe http://www.dorfner.de.
Die Reaktionsmasse härtet dabei mit ungequollenen Füllstoffpartikeln aus, und ist im nicht-ausgehärteten Zustand gießfähig, so dass der gesamte in die Bindemittellösung eingebrachte Vernetzer für die Vernetzung der Bindemittellösung zur Verfügung steht.

Vorzugsweise weist die Reaktionsmasse außerdem eine die Absetzung der Füllstoffpartikel verhindernde Substanz auf, insbesondere ein Thixotropiemittel oder hochdisperse Kieselsäure. Dadurch soll ein Verbiegen der auspolymerisierten Formkörper verhindert werden. Der Anteil der die Absetzung der Füllstoffpartikel verhindernden Substanz beträgt weniger als 1 Gew.% bezogen auf die Reaktionsmasse, insbesondere weniger als 0,5 Gew.% und vorzugsweise etwa 0,15 Gew.%.

In einer besonderen Ausführungsform der Erfindung weist die Reaktionsmasse außerdem Farbpigmente auf. Dadurch kann insbesondere die Reinigungsfreundlichkeit der Formkörper verbessert werden, beispielsweise dahingehend, dass in Eingangsbereichen von öffentlichen Gebäuden aufgrund der Farbgebung der Formkörper Verunreinigungen nicht so deutlich hervortreten. Umgekehrt können in Bereichen mit erhöhten Hygieneanforderungen, wie beispielsweise in Krankenhäusern oder Schwimmbädern, durch die Farbgebung der Formkörper auftretende Verunreinigungen deutlich sichtbar sein.

Die Farbpigmente können je nach Anwendungsfall gleichmäßig oder ungleichmäßig verteilt sein. Die Farbpigmente können auch in einer Farbpigmentdispersion angesetzt werden, die später der Bindemittellösung zugegeben wird und mit dieser vermischt wird. In einem Ausführungsbeispiel der Erfindung enthält die Farbpigmentdispersion keinen Vernetzer, sondern der gesamte Vernetzer wird der Bindemittel lösung zugegeben, solange in dieser noch keine Farbpigmente enthalten sind oder jedenfalls solange diese noch nicht mit einer Farbpigmentdispersion vermischt ist. Neben anorganischen Farbpigmenten können auch organisch basierende Farbpigmente verwendet werden, beispielsweise auch ein zusätzliches Füllmaterial in Partikelform mit einer Größe bis zu einigen Millimetern, das durch Polymerisation mit eingelagerten anorganischen weiteren Füllstoffpartikeln gebildet ist. Außerdem besteht durch die Beimischung von Farbpigmenten die Möglichkeit, den hergestellten Formkörpern bestimmte Signalwirkungen zuzuordnen, beispielsweise können durch entsprechend farbig ausgebildete Formkörper wie beispielsweise Fliesen im industriellen Bereich Stopplinien, Geh- und Fahrwege oder dergleichen markiert werden, oder es kann auch ein Bodenbereich mit erhöhter Rutschfestigkeit von einem angrenzenden Bodenbereich mit normaler Rutschfestigkeit erkennbar abgegrenzt werden.

Die Füllstoffpartikel sind nach der Polymerisation an der Oberfläche der Gebrauchsseite mit einer geschlossenen Schicht polymerisierter Masse beschichtet. Dadurch ist insbesondere die Reinigungsfähigkeit verbessert.

Untersuchungen erfindungsgemäß hergestellter Formteile haben ergeben, dass durch den hohen Vernetzeranteil in der Bindemittellösung keine Abschrumpfung der Bindemittelmatrix von der Gießformoberfläche erfolgt, sondern dass vielmehr die Gießformoberfläche von dem hergestellten Formteil perfekt abgebildet wird. Die an dem hergestellten Formteil feststellbare Oberflächenrauigkeit entspricht der Oberflächenrauigkeit der Gießformoberfläche und kann exakt eingestellt werden, beispielsweise indem die Gießformoberfläche gezielt bearbeitet wird, um die am Formteil gewünschte Oberflächentopographie bereitzustellen. In einem Ausführungsbeispiel wird die Gießformoberfläche mit einer definierten Oberflächenstruktur ausgestattet. Die Gießformoberfläche wird exakt abgeformt. Die Unterschiede in der Kontur der Gießformoberfläche entlang einer Kurvenbahn und der Kontur des Formteils entlang der entsprechenden Kurvenbahn betragen weniger als 5 µm, insbesondere weniger als 2µm, und vorzugsweise weniger als 1 µm.

Durch den hohen Vernetzeranteil in der Bindemittellösung kommt es an der Oberfläche des Formteils auch nicht zu der aus dem Stand der Technik bekannten und im Hinblick auf die gewünschte Härte zum Teil sogar geforderten Hervorhebung der oberflächennahen Füllstoffpartikel durch Rückschrumpf der umgebenden Bindemittelmatrix, die zu einer Oberflächentopographie führt, sondern die Reaktionsmasse spannt sich im ausgehärteten Zustand über die oberflächennahen Füilstoffpartikel und führt dadurch zu der extrem glatten Oberfläche. So beträgt beispielsweise bei erfindungsgemäßen Formteilen der maximale "Höhenunterschied" auf einer Strecke zwischen zwei oberflächennahen Füllstoffpartikeln abgesehen von Topographien der Gießformoberfläche bei einem erfindungsgemäßen Füllstoffgehalt, wie er beispielsweise im nachstehend beschriebenen Ausführungsbeispiel der Rezeptur 3 angegeben ist, weniger als 5 µm, insbesondere weniger als 3 µm und vorzugsweise weniger als 2µm, insbesondere weniger als 1 % der Länge der Strecke.

Der hohe Vernetzungsgrad ist auch durch die geringe Quellung insbesondere der oberflächennahen Schichten des hergestellten Formteils belegt. So ergibt sich bei einem Quellversuch gemäß gängiger polymerchemischer Praxis, insbesondere bei Einlegen in Metylmethacrylat bei Atmosphärendruck und Raumtemperatur für eine Dauer von 20 Stunden mit der Sichtseitenschicht erfindungsgemäßer Formteile nur eine Volumenzunahme von weniger als 10 %, bezogen auf das Ausgangsvolumen, während bei Formteilen aus dem Stand der Technik die Volumenzunahme unter denselben Bedingungen in der Regel mehr als 20 % beträgt. Die Messung der Volumenzunahme bringt dabei bei hochgefüllten Werkstoffen, wie im vorliegenden Fall, größere relative Zunahmen gegenüber der Messung der Massenzunahme.

Vorzugsweise werden der Reaktionsmasse auch Glanzpartikel zugefügt, die einen Metallic-Glanz bei den hergestellten Formkörpern hervorrufen. Hierbei kommen insbesondere solche Glanzpartikel zum Einsatz, die zwar keine Eigenfarbe aufweisen, aber beispielsweise aufgrund von Beschichtungen und dadurch auftretenden Interferenzen Farberscheinungen beim Betrachter hervorrufen. Damit ist nicht nur eine herausragende optische Erscheinung verbunden, sondern auch die Gebrauchseigenschaften sind verbessert. Besonders bevorzugt sind dabei hinsichtlich Schichtmaterial und/oder Schichtdicke geeignet beschichtete Glimmerplättchen.

Die Erfindung betrifft auch ein Verfahren zur Herstellung eines Kunststoff Formkörpers wie vorstehend beschrieben, wobei das Verfahren dadurch gekennzeichnet ist, dass der noch nicht ausgehärteten Reaktionsmasse mehr als 20 Gew.%, bezogen auf den Anteil des Monomers in der Bindemittellösung, eines Vernetzers zugemischt werden, und dass die Füllstoffpartikel nach der Polymerisation an mindestens einer Oberfläche des Formkörpers mit einer geschlossenen Schicht polymerisierter Bindemittellösung beschichtet sind.

Vorzugsweise wird die Reaktionsmasse als Dispersion in eine Form gefüllt und anschließend der Polymerisationsvorgang von einem die Gebrauchsseite bildenden Formenteil der Form gestartet. Das Starten erfolgt üblicherweise durch Aufheizen des entsprechenden Formenteils. Die Polymerisation der Reaktionsmasse erfolgt ausgehend von der Gebrauchsseite auf die gegenüberliegende Seite des herzustellenden Formkörpers. Vorzugsweise ist das die Gebrauchsseite bildende Formenteil dabei unten angeordnet, wobei aber auch jede andere Anordnung des die Gebrauchsseite bildenden Formenteils zu dem erfindungsgemäßen Effekt führen würde.

Durch die Wahl der Partikelgröße und des Anteils der Füllstoffpartikel im Zusammenspiel mit dem Anteil des zwei- oder mehrfunktionellen Monomers oder Polymers wird eine durch Gravitation bedingte Absetzung der Füllstoffpartikel weitgehend vermieden. Erforderlichenfalls wird noch ein gewisser Anteil einer die Absetzung der Füllstoffpartikel verhindernden Substanz beigefügt, insbesondere eines Thixotropiemittels.

Der Vernetzer wird vorzugsweise der Bindemittellösung unmittelbar zugemischt und in dieser homogen verteilt. Das Aushärten der Reaktionsmasse durch Polymerisation der Bindemittellösung erfolgt vorzugsweise in einer Form, wobei es sich dabei insbesondere beim Herstellen von dreidimensionalen Formkörpern um einegeschlossene Form handeln kann. Einfache zweidimensionale Formkörper wie beispielsweise Fliesen oder Platten können grundsätzlich auch in offenen formen hergestellt werden.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt in schematischer Darstellung einige Bestandteile der Reaktionsmasse,
- Fig. 2: zeigt schematisch den Zusammenhang der Qualität erfindungsgemäß hergestellter Kunststoff-Formkörper in Abhängigkeit von dem Anteil des Vernetzers,
- Fig. 3: zeigt in perspektivischer Ansicht einen gattungsgemäßen Kunststoff-Formkörper,
- Fig. 4: zeigt in Tabellenform die Zusammensetzung von insgesamt fünf Rezepturen,
- Fig. 5: zeigt in Tabellenform die Ergebnisse der Rezepturen der Fig. 4 und
- Fig. 6: zeigt in Tabellenform weitere Ergebnisse der Rezepturen mit und ohne Füllstoff.

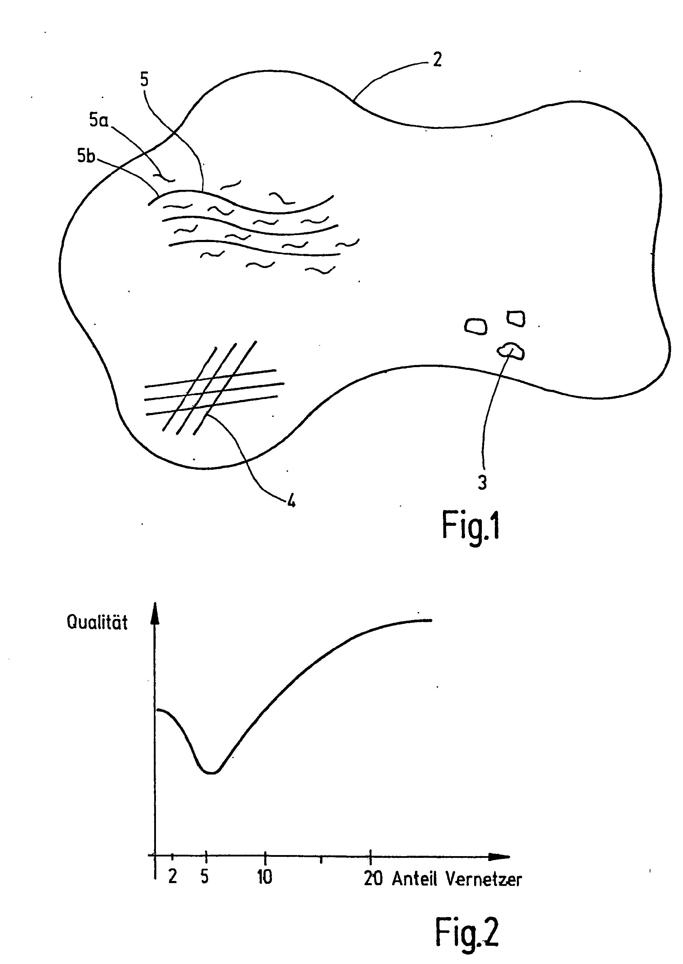

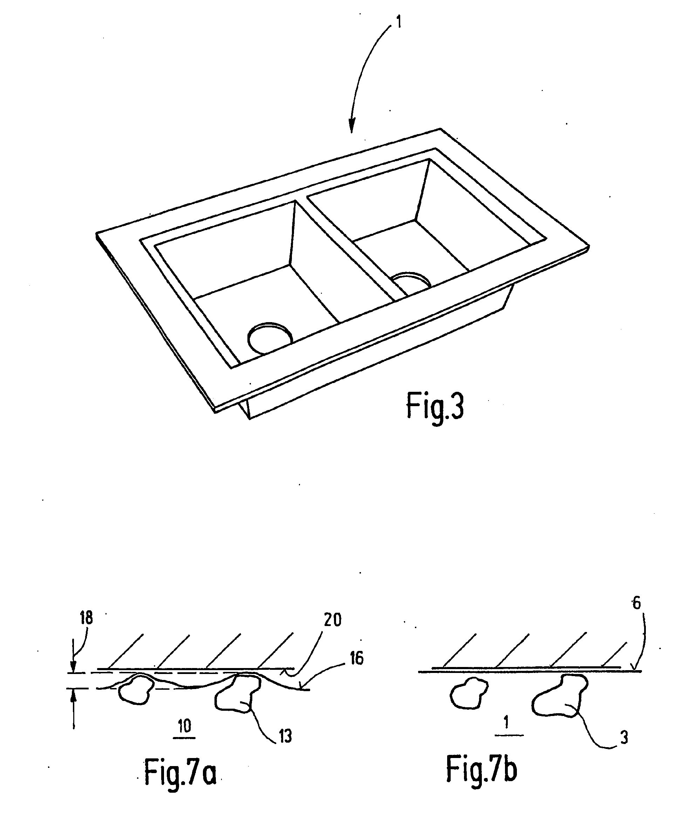

Die Fig. 1 zeigt in schematischer Darstellung einige Bestandteile der Reaktionsmasse 2, insbesondere den partikelförmigen anorganischen Füllstoff 3, den Vernetzer 4 und die Bindemittellösung 5, die aus einem sogenannten Sirup mit monomeren Bestandteilen 5a, beispielsweise Methylmethacrylat, und polymeren Bestandteilen 5b, beilspielsweise Polymethylmethacrylat, gebildet ist. Im nicht-ausgehärteten Zustand ist die Reaktionsmasse 2 von so geringer Viskosität, dass sie gießfähig ist, insbesondere durch Gießformen erfindungsgemäße Kunststoff-Formkörper 1 (Fig. 3) hergestellt werden können.

Die Fig. 2 zeigt schematisch den Zusammenhang der Qualität erfindungsgemäß hergestellter Kunststoff-Formkörper 1 in Abhängigkeit von dem Anteil des Vernetzers 4 in Gew.% bezogen auf den Anteil des Monomers in der Bindemittellösung 5. Ausgehend von dem aus dem Stand der Technik bekannten Wert von 3 Gew.% nimmt insbesondere die optische Qualität der hergestellten Kunststoff-Formkörper 1 mit zunehmendem Anteil des Vernetzers ab und erreicht etwa bei 6 Gew.% ein unerwünschtes Minimum. Überraschenderweise nimmt bei weiter zunehmendem Anteil des Vernetzers 4 die Qualität wieder zu und übersteigt in vielen Anwendungsfällen für Werte oberhalb von 1-0 Gew.% die Qualität der bekannte Kunststoff-Formkörper.

Die Fig. 3 zeigt in perspektivischer Ansicht einen gattungsgemäßen Kunststoff-Formkörper 1, im dargestellten Fall eine Einbauspüle mit zwei Spülbecken. Zur Herstellung werden geschlossene Gießformen eingesetzt, in welche die Reaktionsmasse eingefüllt wird und anschließend durch eine durch Energiezufuhr betriebene Polymerisation ausgehärtet wird. In entsprechender Weise lassen sich auch im Wesentlichen zweidimensionale Formkörper wie beispielsweise Fliesen oder Platten herstellen.

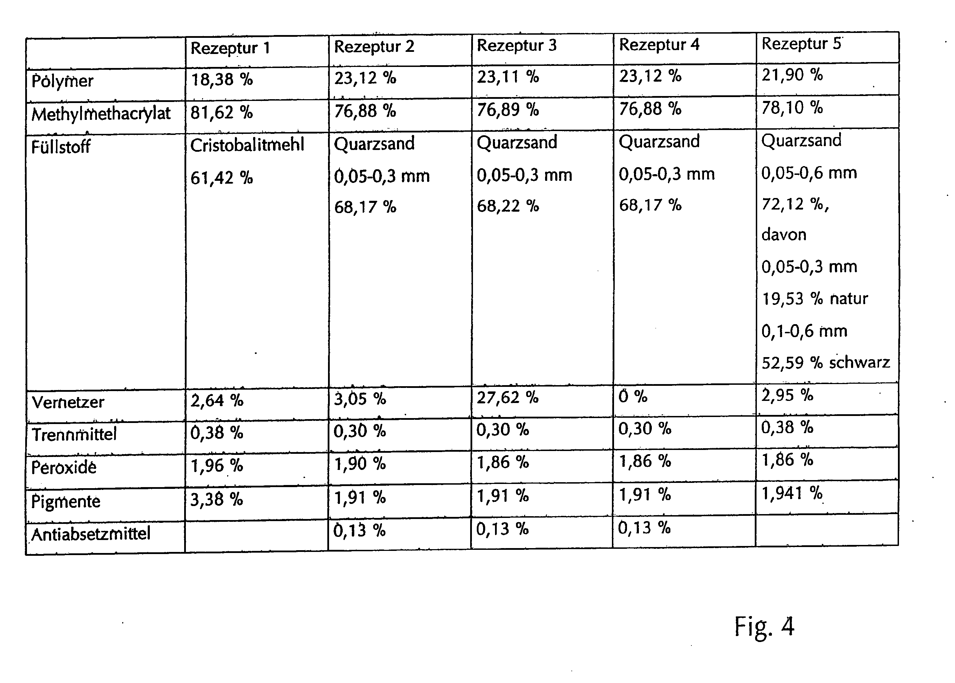

Die Fig. 4 zeigt in Tabellenform die Zusammensetzung von fünf Rezepturen, von denen die Rezeptur 3 erfindungsgemäß ist.

Soweit nicht anders angegeben, handelt es sich bei allen Prozentangaben um Gewichtsprozente bezogen auf die gesamte Reaktionsmasse. Die Anteile von Polymer und Monomer (Methylmethacrylat) ergeben zusammen 100 % der Bindemittellösung, die bei den fünf Rezepturen etwa 30 % Anteil an der Reaktionsmasse hat. Der Anteil der Bindemittellösung aus Polymethylmethacrylat und Methytmethacrytat an der gesamten Reaktionsmasse beträgt in der Rezeptur (1) 33,61 %, in der (Rezeptur (2) 28,61 %, in der Rezeptur (3) 24,18 % in der Rezeptur (4) 29,28 % und in der Rezeptur (5) 24,91 %. Die Angaben betreffend Vernetzer und Peroxide beziehen sich dagegen als Gewichtsprozent auf den Anteil des Monomers in der Bindemittellösung, die aus Polymer und Methylmethacrylat gebildet ist. Die Angaben betreffend das Trennmittel beziehen sich als Gewichtsprozent auf die Bindemittellösung.

Bei der Rezeptur 1 handelt es sich bei dem Füllstoff um Cristobalitmehl mit einem Anteil von 61,42 % und einem Vernetzeranteil von 2,64 %.

Bei der Rezeptur 2 handelt es sich bei dem Füllstoff um einen naturfarbenen Quarzsand mit einer Partikelgröße von bis 0,3 mm, wie er von der Firma DORFNER unter dem Handelsnamen GE BA angeboten wird, mit einem Anteil von 68,17 % und einem Vernetzeranteil von 3,05 %.

Bei der Rezeptur 3 handelt es sich bei dem füllstoff um ei nen naturfarbenen Quarzsand mit einer Partikelgröße von 0,05 bis 0,3 mm, wie er von der Firma DORFNER unter dem Handelsnamen GEBA angeboten wird, mit einem Anteil von 68,22 % und mit einem Vernetzeranheil von 27,62 %.

Bei der Rezeptur 4 handelt es sich bei dem Füllstoff um einen naturfarbenen Quarzsand mit einer Partikelgröße von 0,05 bis 0,3 mm, wie er von der Firma DORFNER unter dem Handelsnamen GEBA angeboten wird, mit einem Anteil von 68,17 %. Bei der Rezeptur 4 wird kein Vernetzer eingesetzt.

Bei der Rezeptur 5 setzt sich der Füllstoff aus zwei unterschiedlichen Quarzsanden zusammen, nämlich aus einem schwarz beschichteten Quarzsand mit einer Partikelgröße zwischen 0,1 und 0,6 mm mit einem Anteil von 52,592 % und aus einem naturfarbenen Quarzsand mit einer Partikelgröße von 0,05 bis 0,3 mm, wie er von der Firma DORFNER unter dem Handelsnamen GEBA angeboten wird, mit einem Anteil von 19,526%, und einem Vernetzeranteil von 2,95 %.

Die Rezepturen 2, 3 und 4 weisen denselben Füllstoff GEBA auf mit praktisch identischem Gewichtsanteil von etwa 68 %, wobei die Rezeptur 2 den üblichen Vernetzeranteil aufweist, die Rezeptur 3 einen erfindungsgemäßen Vernetzeranteil und die Rezeptur 4 gar keinen Vernetzer, um Vergleichswerte für die mit der erfindungsgemäßen Rezeptur 3 erzielbaren Ergebnisse zu erhalten. Abgesehen vom Füllstoff sind die Rezepturen 2 und 5 ähnlich, um Vergleichswerte für unterschiedliche Füllstoffe bei üblichen Vernetzeranteilen zu erhalten.

Die Reaktionsmasse 2 besteht neben der Bindemittellösung 5, die ihrerseits Monomeranteile 5a, insbesondere Methylmethacrylat, und Polymeranteil 5b aufweist, und dem Füllstoff 3 aus einer Reihe von Zuschlagstoffen, einschließlich des Vernetzers 4, einem sogenannten internen Trennmittel zum verbesserten Ablösen des ausgehärteten Formkörpers aus der form, Pigmenten zur Farbgestaltung, Antiabsetzmitteln zur Homogenisierung der Füllstoffe in der auszuhärtenden Reaktionsmasse und Peroxide zum gleichmäßigen gesteuerten Starten der Polymerisation. Dabei werden mit Ausnahme der Pigmente und der Antiabsetzmittel die Zuschlagstoffe der Bindemittellösung zugegeben. Die Prozentangaben für den Vernetzer und die Peroxide in den vorstehend genannten Rezepturen beziehen sich auf das Monomer.

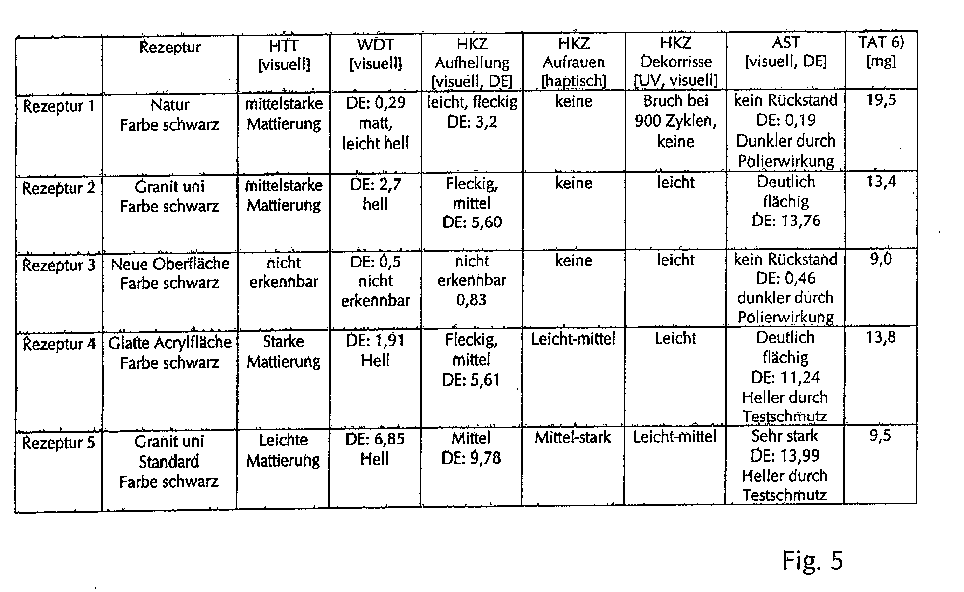

Die Fig. 5 zeigt in Tabellenform die Ergebnisse der Rezepturen der Fig. 4 hinsichtlich wichtiger Gebrauchseigenschaften.

Daraus ergibt sich deutlich, dass die erfindungsgemäße Rezeptur 3 die positiven Eigenschaften der Rezepturen 1 und 2 in optimaler Weise miteinander vereint. Der Heiß-Topf-Test (HTT) in Anlehnung an die Norm EN 13310 ergibt bei visueller Inspektion keine erkennbare Schädigung. Entsprechendes gilt für den Wasserdampftest (WDT) in Anlehnung an die Norm EN 13310.

Auch bei dem Heiß-Kalt-Zyklen-Test in Anlehnung an die Norm EN 13310 ergibt sich keine sichtbare Aufhellung und kein tastbares Aufrauen. Dekorrisse als Ergebnis der Heiß-Kalt-Zyklen (HKZ) treten allenfalls leicht in Erscheinung. Der Anschmutzungstest (AST) lässt keine Schmutzrückstände erkennen, was das gute Ergebnis betreffend das Aufrauen nach dem Heiß-Kalt-Zyklus-Test bestätigt. Der DE-Wert von 0,46 entspricht einer nur sehr geringen Farbveränderung. Abschließend ergibt auch der Taber-Abriebtest (TAT) gemäß DIN 53799 einen sehr geringen und damit guten Wert; die Höhe des Zahlenwertes entspricht dem Gewichtsverlust durch Abtrieb je 100 Umdrehungen.

Die Rezeptur 1 bringt einen unifarbenen schwarzen Formkörper mit glatter Oberfläche hervor. Die Rezeptur 2 bringt einen Formkörper mit einer Granitoptik mit schwarzem Grundton hervor. Die Rezeptur 3 bringt einen Formkörper mit einer neuartigen Oberfläche in der Farbe schwarz hervor. Die Rezeptur 4 bringt einen Formkörper mit einer glatten Acrylfläche in der Farbe schwarz hervor. Die Rezeptur 5 bringt einen Formkörper mit Granitoptik mit einer Oberfläche in der Farbe schwarz hervor.

Eine weitere Besonderheit der erfindungsgemäßen Formkörper besteht darin, dass die Oberfläche sehr hart ist und damit eine hohe Kratzfestigkeit aufweist. Darüber hinaus ergeben sich besonders glatte Oberflächen, insbesondere auch bei der Verwendung von Füllstoffen mit mittlerer und großer Korngröße.

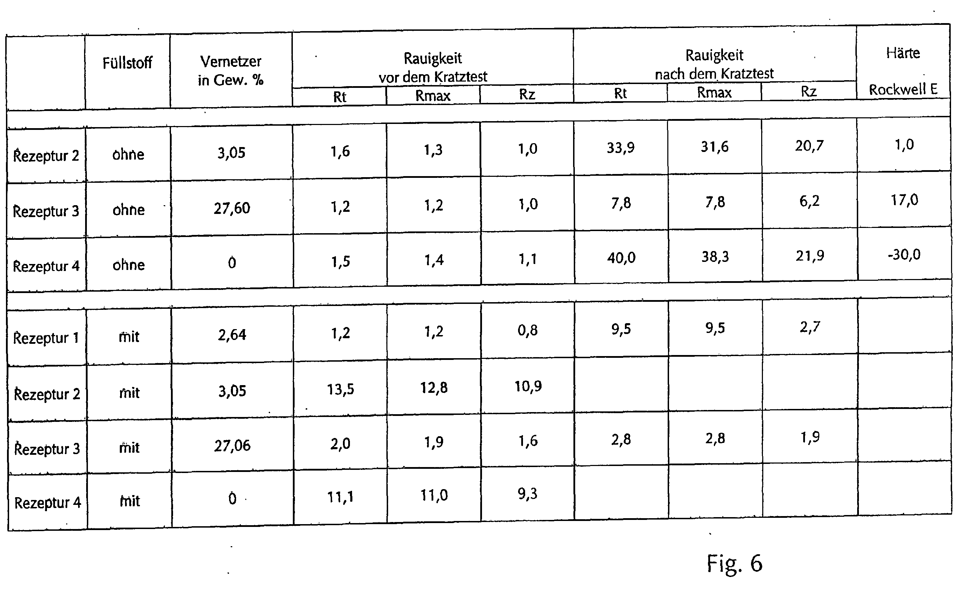

Die Fig. 6 zeigt in Tabellenform weitere Ergebnisse der Rezepturen der Fig. 4, diesmal betreffend die Rauigkeit vor einem Kratztest und nach dem Kratztest sowie die Härte nach Rockwell. Für die Härtemessungen wurden Probenstücke ohne Füllstoffe hergestellt, damit die Härtemessungen nicht durch Füllstoffpartikel verfälscht werden, sondern tatsächlich die Härte der polymerisierten Oberflächenschicht ermittelt wird. Die Härtemessungen wurden mittels eines Härtemessgerätes ASTM D 785-03 der ASTM International, 100 Barr Harbor Drive, in West Conshohocken, PA 19428-2959, USA durchgeführt. Dabei wurde die Rockwell Skala "E" verwendet, die eine Eindruckkörperkugel mit einem Durchmesser von 3,175 mm bei einer Vorkraft von 10 kg und einer Hauptkraft von 100 kg verwendet. Die Messungen wurden nach einer sogenannten "Procedure A" durchgeführt, wie sie in der Anleitung "Standard Test Method for Rockwell Hardness of Plastics and Electrical Insulating Materials" der ASTM International für das D 785-03 angegeben ist.

Als Ergebnis der Härteprüfung ergibt sich für die erfindungsgemäße Rezeptur 3 ein sehr guter Wert von 17,0, wogegen sich für die Rezeptur 2 mit einem Vernetzeranteil von 3,05 Gew.% immerhin noch einen Wert von 1,0 ergibt, und das Probenstück gemäß der Rezeptur 4 ohne Vernetzeranteil mit ~30,0 die geringste Härte aufweist. Als Vernetzer wurde im Rahmen dieser Versuche Trimethylolpropantrimethacrylat (TRIM) eingesetzt.

In der Fig. 6 sind weiterhin aufgeführt Ergebnisse von Rauigkeitsmessungen zur Bestimmung der Glattheit der Oberfläche. Für die gemessenen Parameter Rautiefe Rt, maximale Rautiefe Rmax und gemittelte Rautiefe Rz gilt, dass die Messwerte umso kleiner sind, je glatter die Oberfläche ist. Die Rautiefe Rt ergibt sich aus der Differenz eines lokalen Maximums zu einem lokalen Minimum eines Abschnittes vorgebbarer Länge der Messstrecke. Für diese Kenngröße liegen keine genormten Messbedingungen vor. Die Bestimmung der gemittelten Rautiefe Rz und der maximalen Rautiefe Rmax erfolgte dagegen gemäß DIN 4768 oder DIN EN ISO 11562, Ausgabe: 1998-09. Die gemittelte Rautiefe Rz wird durch eine Mittelung über fünf Einzelrautiefen bestimmt wird, sodass der Einfluss von Ausreißen auf den Messwert gemindert ist. Die maximale Rautiefe Rmax ist die größte Einzelrautiefe innerhalb der Gesamtmessstrecke, deren Länge vorgebbar ist.

Die Rauigkeit wurde nach der Herstellung der Probenstücke als "Rauigkeit vor dem Kratztest" gemessen. Anschließend wurde bei Probenstücken der Rezepturen 2, 3 und 4 ohne Füllstoff und bei Probenstücken der Rezepturen 1 und 3 mit Füllstoff ein Kratztest durchgeführt, wobei das zugehörige Kratzgerät der DIN 53799 T10 oder der DIN 13310 entspricht, und der Ritzdiamant einen 90° Kegelschliff aufweist mit 90 µm Randdurchmesser. Bei den Probestücken der Rezepturen 2, 3 und 4 ohne Füllstoffe ergab sich vor dem Kratztest erwartungsgemäß eine geringe Rauigkeit. Diese glatte Oberfläche wird aber bei den Rezepturen 2 und 4 mit üblichem Vernetzeranteil bzw. ohne Vernetzer durch den kratzfest stark aufgeraut, wie sich aus den hohen Zahlenwerten für die Parameter Rt, Rmax und Rz von mehr als 20 ergibt. Demgegenüber zeigt das Probenstück gemäß der erfindungsgemäßen Rezeptur 3 nur eine verhältnisnmäßig geringe Aufrauung durch den Kratztest mit Messwerten für Rt, Rmax und Rz von jeweils unter 10.

Ein entsprechendes Ergebnis zeigen auch die Probenstücke der Rezepturen 1 und 3 mit Füllstoffen. Dabei ergeben sich bei dem Probenstück der Rezeptur 1 vor dem Kratztest noch geringere Messwerte für die Rauigkeit, allerdings nur, weil bei der Rezeptur 1 ein deutlich feinerer Füllstoff verwendet wird, siehe Fig. 4. Die erfindungsgemäße Rezeptur 3 liefert vor dem Kratztest ebenfalls sehr glatte Oberflächen mit Ergebnissen für Rt, Rmax und Rz von maximal 2 betragen, wogegen die hinsichtlich des verwendeten Füllstoffes vergleichbaren Rezepturen 2 und 4 mit üblichem bzw. ohne Vernetzeranteil bereits deutlich höhere Rauigkeitswerte von etwa 10 oder darüber aufweisen, weswegen kein vergleichbarer Kratztest mehr durchführbar war und dementsprechend in der Fig. 6 bezüglich der Rezepturen 2 und 4 keine Messergebnisse für die Rauigkeit nach dem Kratztest angegeben sind.

Auffällig ist dabei, dass ausgehend von der Rezeptur 4 (kein Vernetzer) bei einer Erhöhung des Vernetzeranteils (Rezeptur 2) die Rauigkeit zunächst zunimmt. Es ist überaus überraschend, dass bei einer weiteren Erhöhung des Vernetzeranteils (Rezeptur 3) die Rauigkeit auf einmal drastisch abnimmt und sich damit viel glattere Oberflächen ergeben. Dieses Ergebnis entspricht dem in der Fig. 2 schematisch dargestellten Verlauf der Qualität über dem Vernetzeranteil.

Die erfindungsgemäße Rezeptur 3 zeigt auch nach dem Kratztest geringe Rauigkeitswerte von unter 3, wohingegen die Vergleichsrezeptur 1 trotz des dort verwendeten viel feineren Füllstoffes eine deutlich größer Rauigkeit aufweist.

Die Figuren 7a und 7b zeigen die Topographie hergestellter Formkörper im Querschnitt, und zwar die Figur 7a für einen Formkörper 10 nach dem Stand der Technik und die Figur 7b für einen erfindungsgemäßen Formkörper 1. Beim bekannten Formkörper 10 kommt es zu einem Abschrumpfen der Oberfläche 16 des Formkörpers 10 von der Gießformoberfläche 20 aufgrund eines Schrumpfens der Bindemittelmatrix und dadurch zu einem Abformen der Füllstoffpartikel 13 an der Oberfläche des Formkörpers 10 und damit zu einem Hervortreten der Füllstoffpartikel 13. Es entsteht eine Topographie auf der Oberfläche 16, die nicht maßgeblich von der Gießformoberfläche 20 bestimmt ist, und die abhängig ist von der Größe der Füllstoffpartikel 13 und dem Abstand zwei benachbarter Fül lstoffpartikel 13. Für Füllstoffe in der Größe zwischen 100 und 200 µm kann der maximale Höhenunterschied 18 auf der Strecke zwischen zwei benachbarten Füllstoffpartikeln 13 bis zu 13 µm oder bis zu 7 % der Strecke zwischen den benachbarten Füllstoffpartikeln betragen.
Bei ansonsten identischen, aber den hohen Vernetzeranteil aufweisenden erfindungsgemäßen Formkörpern 1 (Fig. 7b) beträgt dieser maximale Höhenunterschied 18 auf der Strecke zwischen zwei benachbarten Füllstoffpartikeln 3 weniger als 2 µm oder weniger als 1 % der Strecke zwischen den benachbarten Füllstoffpartikeln; es ergibt sich dadurch eine perfekte Abbildung der Gießformoberfläche 20.

## Patentansprüche

1. Kunststoff-Formkörper (1), der aus einer ausgehärteten Reaktionsmasse (2) hergestellt ist, wobei die Reaktionsmasse (2) im nicht-ausgehärteten Zustand gießfähig ist und einen anorganischen partikelförmigen Füllstoff (3) mit einem Anteil von 50 bis 90 Gew.% bezogen auf die Reaktionsmasse (2), einen Vernetzer (4), und eine Bindemittellösung (5) mit einem Anteil von 10 bis 50 Gew.% bezogen auf die Reaktionsmasse (2) aufweist, wobei die Bindemittellösung (5) ein Monomer und ein darin gelöstes Polymer aufweist, **dadurch gekennzeichnet, dass** der Anteil des der Bindemittellösung (5) zugemischten Vernetzers (4) mehr als 20 Gew.% beträgt bezogen auf den Anteil des Monomers in der Bindemittellösung (5), und dass die Füllstoffpartikel (3) nach der Polymerisation an mindestens einer Oberfläche des Formkörpers (1) mit einer geschlossenen Schicht polymerisierter Bindemittellösung (5) beschichtet sind.

2. Kunststoff-Formkörper (1) nach Anspruch 1, **dadurch gekennzeichnet, dass** der Anteil des Vernetzers (4) bezogen auf den Anteil des Monomers in der Bindemittellösung (5) zwischen 20 und 30 Gew.% beträgt.

3. Kunststoff Formkörper (1) nach Anspruch 1 oder 2, **dadurch gekennzeichnet, dass** der Vernetzer (4) ein zweifach oder mehrfach funktionelles Monomer oder Polymer ist, insbesondere ein zweifach oder mehrfach funktionelles Acrylat oder Polyacrylat ist, vorzugsweise Ethylenglykoldimethacrylat, Trimethylolpropantrimethacrylat oder Butandioldimethacrylat.

4. Kunststoff Formkörper (1) nach einem der Ansprüche 1 bis 3, **dadurch gekennzeichnet, dass** der Vernetzer (4) schneller als die polymerisierbare Bindemittellösung polymerisiert.

5. Kunststoff Formkörper (1) nach einem der Ansprüche 1 bis 4, **dadurch gekennzeichnet, dass** der Vernetzer (4) eine Kombination aus zwei oder mehreren jeweils zweifach oder mehrfach funktionellen Monomeren oder Polymeren ist, insbesondere eine Kombination aus zwei oder mehreren jeweils zweifach oder mehrfach funktionellen Acrylaten oder Polyacrylaten ist.

6. Kunststoff-Formkörper (1) nach einem der Ansprüche 1 bis 5, **dadurch gekennzeichnet, dass** der Vernetzer (4) in der Reaktionsmasse (2) gleichverteilt ist, insbesondere dass der Vernetzer (4) in der Bindemittellösung (5) gleichverteilt ist.

7. Kunststoff Formkörper (1) nach einem der Ansprüche 1 bis 6, **dadurch gekennzeichnet, dass** der Anteil der Bindemittellösung (5) zwischen 10 und 45 Gew.% beträgt, insbesondere zwischen 15 und 40 Gew.%, und vorzugsweise zwischen 20 und 35 Gew.%, jeweils bezogen auf die Reaktionsmasse (2).

8. Kunststoff-Formkörper (1) nach einem der Ansprüche 1 bis 7, **dadurch gekennzeichnet, dass** das Verhältnis der Gewichtsanteile von Polymer zu Monomer in der Bindemittellösung (5) zwischen 1 : 1 und 1 : 10 beträgt, insbesondere zwischen 1 : 2 und 1 : 7, und vorzugsweise zwischen 1 : 3 und 1 : 5.

9. Kunststoff-Formkörper (1) nach einem der Ansprüche 1 bis 8, **dadurch gekennzeichnet, dass** die Bindemittellösung (5) eine Mischung aus Methylmethacrylat und Polymethylmethacrylat aufweist.

10. Kunststoff-Formkörper (1) nach einem der Ansprüche 1 bis 9, **dadurch gekennzeichnet, dass** der Anteil des partikelförmigen anorganischen Füllstoffs (3) zwischen 55 und 85 Gew.% beträgt, insbesondere zwischen 60 und 80 Gew.% und vorzugsweise zwischen 65 und 75 Gew.%, jeweils bezogen auf die Reaktionsmasse (2).

11. Kunststoff-Formkörper (1) nach einem der Ansprüche 1 bis 10, **dadurch gekennzeichnet, dass** der partikelförmigen anorganische Füllstoff (3) mineralisch ist, insbesondere kristallin.

12. Kunststoff-Formkörper (1) nach einem der Ansprüche 1 bis 11, **dadurch gekennzeichnet, dass** mehr als 90 Gew.% des partikelförmigen anorganischen Füllstoffs (3), insbesondere mehr als 95 Gew.%, jeweils bezogen auf den gesamten Füllstoff (3), eine Korngröße zwischen 0,05 und 2 mm aufweisen, insbesondere zwischen 0,05 und 1,0 mm, und vorzugsweise zwischen 0,05 und 0,3 mm.

13. Kunststoff-Formkörper (1) nach einem der Ansprüche 1 bis 12, **dadurch gekennzeichnet, dass** die Reaktionsmasse (2) außerdem eine die Absetzung der Füllstoffpartikel (3) verhindernde Substanz aufweist, beispielsweise hochdisperse Kieselsäure.

14. Kunststoff-Formkörper (1) nach einem der Ansprüche 1 bis 13,
**dadurch gekennzeichnet, dass** die Reaktionsmasse (2) außerdem Farbpigmente aufweist.

15. Kunststoff Formkörper (1) nach einem der Ansprüche 1 bis 14, **dadurch gekennzeichnet, dass** die Reaktionsmasse (2) außerdem Glanzpartikel aufweist, insbesondere Glanzpartikel, die keine Eigenfarbe aufweisen, beispielsweise beschichteten Glimmer.

16. Kunststoff-Formkörper (1) nach einem der Ansprüche 1 bis 15, **dadurch gekennzeichnet, dass** der Formkörper (1) eine dreidimensionale Gestalt aufweist, beispielsweise ein Spülbecken oder eine Dusch- oder Badewanne ist, und dass die Reaktionsmasse (2) in einer Form ausgehärtet ist.

17. Kunststoff-Formkörper (1) nach einem der Ansprüche 1 bis 15, **dadurch gekennzeichnet, dass** der Formkörper (1) im Wesentlichen eine zweidimensionale Gestalt aufweist, beispielsweise eine Fliese oder eine Platte ist, und dass die Reaktionsmasse (2) in einer Form ausgehärtet ist.

18. Verfahren zur Herstellung eines Kunststoff-Formkörpers (1) durch Aushärten einer Reaktionsmasse (2), die im nicht-ausgehärteten Zustand gießfähig ist und einen anorganischen partikelförmigen Füllstoff (3) mit einem Anteil von 50 bis 90 Gew.% bezogen auf die Reaktionsmasse (2), und eine Bindemittel lösung (5) mit einem Anteil von 10 bis 50 Gew.% bezogen auf die Reaktionsmasse (2) aufweist, wobei die Bindemittellösung (5) ein Monomer und ein darin gelöstes Polymer aufweist, **dadurch gekennzeichnet, dass** der Bindemittellösung (5) mehr als 20 Gew.%, bezogen auf den Anteil des Monomers in der Bindemittellösung (5), eines Vernetzers (4) zugemischt werden, und dass die Füllstoffpartikel (3) nach der Polymerisation an mindestens einer Oberfläche des Formkörpers (1) mit einer geschlossenen Schicht polymerisierter Bindemittellösung (5) beschichtet sind.

19. Verfahren nach Anspruch 18, **dadurch gekennzeichnet, dass** das Aushärten der Reaktionsmasse (2) durch Polymerisation der Bindemittellösung (5) erfolgt.

## Claims

1. Moulded plastics body (1) produced from a cured reaction mixture (2), the reaction mixture (2) being castable in the uncured state and having an inorganic particulate filler (3) in a proportion of from 50 to 90% by weight based on the reaction mixture (2), a crosslinking agent (4), and a binder solution (5) in a proportion of from 10 to 50% by weight based on the reaction mixture (2), the binder solution (5) having a monomer and a polymer dissolved therein, **characterised in that** the proportion of the crosslinking agent (4) admixed with the binder solution (5) is more than 20% by weight based on the proportion of the monomer in the binder solution (5), and after polymerisation the filler particles (3) are coated on at least one surface of the moulded body (1) with a closed layer of polymerised binder solution (5).

2. Moulded plastics body (1) according to claim 1, **characterised in that** the proportion of the crosslinking agent (4) based on the proportion of the monomer in the binder solution' (5) is from 20 to 30% by weight.

3. Moulded plastics body (1) according to claim 1 or 2, **characterised in that** the crosslinking agent (4) is a bifunctional or polyfunctional monomer or polymer, especially a bifunctional or polyfunctional acrylate or polyacrylate, preferably ethylene glycol dimethacrylate, trimethylolpropane trimethacrylate or butanediol dimethacrylate.

4. Moulded plastics body (1) according to any one of claims 1 to 3, **characterised in that** the crosslinking agent (4) polymerises more rapidly than the polymerisable binder solution.

5. Moulded plastics body (1) according to any one of claims 1 to 4, **characterised in that** the crosslinking agent (4) is a combination of two or more bifunctional or polyfunctional monomers or polymers, especially a combination of two or more bifunctional or polyfunctional acrylates or polyacrylates.

6. Moulded plastics body (1) according to any one of claims 1 to 5, **characterised in that** the crosslinking agent (4) is uniformly distributed in the reaction mixture (2), especially **in that** the crosslinking agent (4) is uniformly distributed in the binder solution (5).

7. Moulded plastics body (1) according to any one of claims 1 to 6, **characterised in that** the proportion of the binder solution (5) is from 10 to 45% by weight, especially from 15 to 40% by weight, and preferably from 20 to 35% by weight, each based on the reaction mixture (2).

8. Moulded plastics body (1) according to any one of claims 1 to 7, **characterised in that** the ratio of the proportions by weight of polymer to monomer in the binder solution (5) is from 1:1 to 1:10, especially from 1:2 to 1:7, and preferably from 1:3 to 1:5.

9. Moulded plastics body (1) according to any one of claims 1 to 8, **characterised in that** the binder solution (5) has a mixture of methyl methacrylate and polymethyl methacrylate.

10. Moulded plastics body (1) according to any one of claims 1 to 9, **characterised in that** the proportion of the particulate inorganic filler (3) is from 55 to 85% by weight, especially from 60 to 80% by weight, and preferably from 65 to 75% by weight, each based on the reaction mixture (2).

11. Moulded plastics body (1) according to any one of claims 1 to 10, **characterised in that** the particulate inorganic filler (3) is mineral, especially crystalline.

12. Moulded plastics body (1) according to any one of claims 1 to 11, **characterised in that** more than 90% by weight of the particulate inorganic filler (3), especially more than 95% by weight, each based on the total filler (3), has a grain size of from 0.05 to 2 mm, especially from 0.05 to 1.0 mm, and preferably from 0.05 to 0.3 mm.

13. Moulded plastics body (1) according to any one of claims 1 to 12, **characterised in that** the reaction mixture (2) furthermore has a substance that prevents settling of the filler particles (3), for example highly dispersed silicic acid.

14. Moulded plastics body (1) according to any one of claims 1 to 13, **characterised in that** the reaction mixture (2) furthermore has colouring pigments.

15. Moulded plastics body (1) according to any one of claims 1 to 14, **characterised in that** the reaction mixture (2) furthermore has glossy particles, especially glossy particles that do not have a colour of their own, for example coated mica.

16. Moulded plastics body (1) according to any one of claims 1 to 15, **characterised in that** the moulded body (1) has a three-dimensional shape, for example is a sink or a shower tray or bathtub, and the reaction mixture (2) is cured in a mould.

17. Moulded plastics body (1) according to any one of claims 1 to 15, **characterised in that** the moulded body (1) substantially has a two-dimensional shape, for example is a tile or a slab, and the reaction mixture (2) is cured in a mould.

18. Method for producing a moulded plastics body (1) by curing a reaction mixture (2) that is castable in the uncured state and has an inorganic particulate filler (3) in a proportion of from 50 to 90% by weight based on the reaction mixture (2), and a binder solution (5) in a proportion of from 10 to 50% by weight based on the reaction mixture (2), the binder solution (5) having a monomer and a polymer dissolved therein, **characterised in that** more than 20% by weight, based on the proportion of the monomer in the binder solution (5), of a crosslinking agent (4) are admixed with the binder solution (5), and after polymerisation the filler particles (3) are coated on at least one surface of the moulded body (1) with a closed layer of polymerised binder solution (5).

19. Method according to claim 18, **characterised in that** the reaction mixture (2) is cured by polymerisation of the binder solution (5).

## Revendications

1. Pièce ( 1 ) moulée en matière plastique, qui est produite en une composition ( 2 ) de réaction durcie, la composition ( 2 ) de réaction étant apte à s'écouler à l'état non durci et ayant une charge ( 3 ) inorganique sous forme de particules en une proportion de 50 à 90 % en poids rapportée à la composition ( 2 ) de réaction, un agent ( 4 ) de réticulation et une solution ( 5 ) de liant en une proportion de 10 à 50 % en poids rapportée à la composition ( 2 ) de réaction, la solution ( 5 ) d'agent liant ayant un monomère et un polymère qui y est dissout, **caractérisée en ce que** la proportion de l'agent ( 4 ) de réticulation mélangé à la solution ( 5 ) d'agent liant représente plus de 20 % en poids rapportée à la proportion du monomère dans la solution ( 5 ) d'agent liant et **en ce que** les particules ( 3 ) de charge sont revêtues après la polymérisation sur au moins une surface de la pièce ( 1 ) moulée d'une couche fermée de solution ( 5 ) polymérisée d'agent liant.

2. Pièce ( 1 ) moulée en matière plastique suivant la revendication 1, **caractérisée en ce que** la proportion d'agent ( 4 ) de réticulation rapportée à la proportion du monomère dans la solution ( 5 ) d'agent liant est comprise entre 20 et 30 % en poids.

3. Pièce ( 1 ) moulée en matière plastique suivant la revendication 1 ou 2, **caractérisée en ce que** l'agent ( 4 ) de réticulation est un monomère ou un polymère bifonctionnel ou plurifonctionnel, notamment un acrylate ou un polyacrylate bifonctionnel ou plurifonctionnel, de préférence du diméthacrylate d'éthylène glycol, du triméthacrylate de triméthylol propane ou du diméthacrylate de butane diol.

4. Pièce ( 1 ) moulée en matière plastique suivant l'une des revendications 1 à 3, **caractérisée en ce que** l'agent ( 4 ) de réticulation polymérise plus vite que la solution d'agent liant polymérisable.

5. Pièce ( 1 ) moulée en matière plastique suivant l'une des revendications 1 à 4, **caractérisée en ce que** l'agent ( 4 ) de réticulation est une combinaison de deux ou plusieurs monomères ou polymères, respectivement bifonctionnels ou plurifonctionnels, notamment une combinaison de deux ou plusieurs acrylates ou polyacrylates, respectivement bifonctionnels ou plurifonctionnels.

6. Pièce ( 1 ) moulée en matière plastique suivant l'une des revendications 1 à 5, **caractérisée en ce que** l'agent ( 4 ) de réticulation est réparti uniformément dans la composition ( 2 ) de réaction, notamment par le fait que l'agent ( 4 ) de réticulation est réparti uniformément dans la solution ( 5 ) d'agent liant.

7. Pièce ( 1 ) moulée en matière plastique suivant l'une des revendications 1 à 6, **caractérisée en ce que** la proportion de la solution ( 5 ) d'agent liant est comprise entre 10 et 45 % en poids, notamment entre 15 et 40 % en poids, et de préférence entre 20 et 35 % en poids rapportée à la composition ( 2 ) de réaction.

8. Pièce ( 1 ) moulée en matière plastique suivant l'une des revendications 1 à 7, **caractérisée en ce que** le rapport des proportions en poids du polymère au monomère dans la solution ( 5 ) d'agent liant est compris entre 1:1 et 1:10, notamment entre 1:2 et 1:7, et de préférence entre 1:3 et 1:5.

9. Pièce ( 1 ) moulée en matière plastique suivant l'une des revendications 1 à 8, **caractérisée en ce que** la solution ( 5 ) d'agent liant comporte un mélange de méthacrylate de méthyle et de poly ( méthacrylate de méthyle ).

10. Pièce ( 1 ) moulée en matière plastique suivant l'une des revendications 1 à 9, **caractérisée en ce que** la proportion de la charge ( 3 ) inorganique sous forme de particules est comprise entre 55 et 85 % en poids, notamment entre 60 et 80 % en poids, et de préférence entre 65 et 75 % en poids rapportée respectivement à la composition ( 2 ) de réaction.

11. Pièce ( 1 ) moulée en matière plastique suivant l'une des revendications 1 à 10, **caractérisée en ce que** la charge ( 3 ) inorganique sous forme de particules est minérale, notamment cristalline.

12. Pièce ( 1 ) moulée en matière plastique suivant l'une des revendications 1 à 11, **caractérisée en ce que** plus de 90 % en poids de la charge ( 3 ) inorganique sous forme de particules, notamment plus de 95 % en poids, rapportée respectivement à toute la charge ( 3 ) a une granulométrie comprise entre 0,05 et 2 mm, notamment entre 0,05 et 1,0 mm, et de préférence entre 0,05 et 0,3 mm.

13. Pièce ( 1 ) moulée en matière plastique suivant l'une des revendications 1 à 12, **caractérisée en ce que** la composition ( 2 ) de réaction a en outre une substance empêchant la décantation des particules ( 3 ) de charge, par exemple de l'acide silicique très dispersé.

14. Pièce ( 1 ) moulée en matière plastique suivant l'une des revendications 1 à 13, **caractérisée en ce que** la composition ( 2 ) de réaction a en outre des pigments colorés.

15. Pièce ( 1 ) moulée en matière plastique suivant l'une des revendications 1 à 14, **caractérisée en ce que** la composition ( 2 ) de réaction a en outre des particules donnant du brillant, notamment des particules donnant du brillant qui n'ont pas de couleur propre, par exemple du mica en couche.

16. Pièce ( 1 ) moulée en matière plastique suivant l'une des revendications 1 à 15, **caractérisée en ce que** la pièce ( 1 ) moulée a une forme en trois dimensions, en étant par exemple un lavabo ou une cuvette de douche ou une baignoire et **en ce que** la composition ( 2 ) de réaction est durcie dans un moule.

17. Pièce ( 1 ) moulée en matière plastique suivant l'une des revendications 1 à 15, **caractérisée en ce que** la pièce ( 1 ) moulée a une forme sensiblement en deux dimensions, en étant par exemple un carreau ou une plaque, et **en ce que** la composition ( 2 ) de réaction est durcie dans un moule.

18. Procédé de production d'une pièce ( 1 ) moulée en matière plastique par durcissement d'une composition ( 2 ) de réaction qui peut s'écouler à l'état non durci et qui a une charge ( 3 ) inorganique sous forme de particules en une proportion de 50 à 90 %en poids rapportée à la composition ( 2 ) de réaction et une solution ( 5 ) d'agent liant en une proportion de 10 à 50 % en poids rapportée à la composition ( 2 ) de réaction, la solution ( 5 ) d'agent liant ayant un monomère et un polymère qui y est dissout, **caractérisé en ce que** l'on ajoute un agent ( 4 ) de réticulation à la solution ( 5 ) d'agent liant à raison de plus de 20 % en poids rapportée à la proportion du monomère dans la solution ( 5 ) d'agent liant et **en ce que** l'on revêt les particules ( 3 ) de charge après la polymérisation sur au moins une surface de la pièce ( 1 ) moulée d'une couche fermée de solution ( 5 ) polymérisée d'agent liant.

19. Procédé suivant la revendication 18, **caractérisé en ce que** l'on effectue le durcissement de la composition ( 2 ) de réaction après polymérisation de la solution ( 5 ) d'agent liant.
